# FASCICULE DE BREVET EUROPEEN

(11) **EP 1 941 118 B1**
(45) Date de publication et mention de la délivrance du brevet: **16.04.2014**
(21) Numéro de dépôt: 06818293.0
(22) Date de dépôt: 26.10.2006
(51) Int. Cl.: E05B 85/10, B60S 1/34, B60S 1/58, B60S 1/04

(54) **DISPOSITIF D'OUVERTURE DE VITRE ARRIERE ET/OU COFFRE DE VEHICULE**
VORRICHTUNG ZUM ÖFFNEN EINES RÜCKFENSTERS UND/ODER KOFFERRAUMS EINES FAHRZEUGS
DEVICE FOR OPENING A REAR WINDOW AND/OR TRUNK OF A VEHICLE

(30) Priorité: 26.10.2005 FR 0510906
(43) Date de publication de la demande: 09.07.2008
(73) Titulaire: VALEO SYSTEMES D'ESSUYAGE, 78321 La Verrière (FR)
(72) Inventeur: LAURENS, Romain, F-63000 Clermont-Ferrand (FR)
(74) Mandataire: Léveillé, Christophe
(86) Numéro de dépôt international: PCT/EP2006/010316
(87) Numéro de publication internationale: WO 2007/048602

(56) Documents cités:
- GB-A- 791 420
- US-A- 5 977 678
- US-A1- 2004 216 259
- US-A1- 2004 245 801

## Description

La présente invention concerne un dispositif d'ouverture de hayon (avec vitre et/ou coffre) de véhicule, comprenant un système d'ouverture et fermeture dudit hayon (incluant un bouton poussoir) et une poignée de préhension.

Certains types de véhicules comportent un hayon, c'est à dire un élément de carrosserie mobile articulé soit en arrière de pavillon, embarquant la vitre arrière et ouvrant vers le haut, soit en arrière de plancher et ouvrant vers le bas comme sur un « pick-up » par exempte.

Par extension, le terme hayon désigne également dans le langage commun, mais de façon impropre, un volet arrière. C'est-à-dirè que la vitre arrière peut s'ouvrir indépendamment du coffre, tel des modèles du type dénommé « break » ou « sport wagon ».

Un dispositif d'ouverture de vitre arrière comprend une poignée, généralement en deux parties, et un bouton d'ouverture.

On connaît, selon l'art antérieur, un premier système de poignée collée sur la vitre arrière et incluant un bouton d'ouverture.

Il existe un second système, selon l'art antérieur, où le bouton d'ouverture du coffre est situé par exemple au niveau de la plaque d'immatriculation ou du tableau de bord. Les poignées servent ainsi uniquement à l'ouverture du coffre. La poignée, selon l'art antérieur, peut être collée sur la vitre arrière, montée autour de l'axe moteur d'un porte-balai d'essuie-glace, intégrée au porte balai d'essuie-glace ou être fixée sur la carrosserie.

Cependant, ces dispositifs connus présentent des inconvénients.

En premier lieu, ils comportent un grand nombre de pièces. En effet, il faut prévoir une poignée; elle-même en plusieurs parties, ainsi qu'un porte-balai d'essuie-glace complet.

De plus, selon certains des dispositifs connus, les circuits électriques associés sont disposés à l'extérieur du véhicule, par exemple au niveau d'une poignée collée sur la vitre arrière. Cette disposition provoque à l'ouverture et à la fermeture divers problèmes électriques. Afin de tenter d'y remédier, des joints supplémentaires sont prévus mais ils n'évitent pas les problèmes de connectiques usuels qui sont les causes majeures de pannes rencontrées par les constructeurs.

En, outre, ces dispositifs, selon l'art antérieur, ne sont pas intuitifs pour l'utilisateur à l'ouverture et la fermeture de la vitre et/ou du coffre, ainsi qu'au niveau de leur installation ou lors d'un changement de certaines pièces constitutives.

De surcroît, ils sont disgracieux, étant donné la présence physique supplémentaire d'une poignée sur la face arrière du véhicule.

Il est enfin connu de US 20040245801 d'utiliser le porte-balai d'essuie-glace pour constituer la poignée et le bouton d'ouverture.

La présente invention propose un dispositif comportant moins de pièces, représentant une diminution du prix et une rapidité accrue de l'installation sur un véhicule.

De plus, le dispositif selon l'invention est facilement fabricable, sans besoin de modifier la ligne de production, et ce à des coûts peu élevés, aussi bien en matière brute qu'en main d'oeuvre.

En outre, le dispositif selon l'invention respecte l'aspect esthétique des véhicules.

De manière supplémentaire, le dispositif selon l'invention possède l'avantage de pouvoir être couplé à, ou remplacer, un système de commande d'ouverture de coffre déjà en place.

A cette fin, l'invention porte sur un dispositif d'ouverture et fermeture de vitre arrière et/ou coffre de véhicule, selon la revendication 1 ou 6.

Selon une variante, il comporte un système d'ouverture et de fermeture comportant un bouton poussoir relié à un mécanisme d'actionnement.

Avantageusement, le bouton poussoir peut soit être intégré sur la partie longitudinale de la monture support du porte-balai d'essuie-glace, soit disposé sur une poignée intégrée audit porte-balai d'essuie-glace, soit disposé du coté de l'extrémité distale de l'axe du moteur dudit porte-balai, soit disposé à proximité du porte-balai, soit positionné sur la vitre arrière ou sur la carrosserie du véhicule.

Le bouton poussoir est susceptible d'être actionné de manière mécanique ou par l'intermédiaire d'un système de télécommande du type IR, radiofréquence ou autre, et il inclut une tête disposée dans la tête du porte-balai d'essuie-glace et une tige d'action mobile en translation dans un logement axial prévu dans l'arbre d'un moteur d'entraînement d'essuie-glace, l'extrémité distale de ladite tige agissant sur un contacteur qui déclenche un bouton électrique, lui-même relié par des moyens de connexion audit moteur.

Les moyens de connexion reliant le bouton poussoir au moteur d'entraînement peuvent se présenter sous la forme de fils passant dans un logement axial de l'arbre du moteur, et peuvent inclure des moyens de raccordement du type prise « RJ 45 » ou toute autre connections.

Avantageusement, le système électrique est disposé à l'intérieur du véhicule par un système de fixation dudit moteur d'entraînement sur la vitre arrière ou dans la carrosserie.

De manière avantageuse, le dispositif comprend un système de réinitialisation du système lors de la fermeture de la vitre, et il est couplé à un système de commande d'ouverture du coffre.

L'invention sera maintenant mieux comprise à la lumière de la description qui suit, se rapportant à des exemples illustratifs, et en aucun cas limitatifs, de la présente invention, en référence aux dessins ci-joints dans lesquels :
- Les figures 1A et 1B représentent, respectivement de dessus et en coupe, un premier exemple de dispositif selon l'invention.
- Les figures 1C et 1D représentent, respectivement en coupe et de dessus, un second exemple de dispositif selon l'invention.
- Les figures 2A et 2B sont des représentations en coupe d'un bouton poussoir selon l'invention, en position respectivement ouverte et fermée.
- Les figures 3A et 3B illustrent une autre forme de réalisation d'un bouton poussoir, respectivement en position ouverte et fermée.
- La figure 4 est une première forme de réalisation de connectique reliant le bouton poussoir à un moteur d'entraînement d'essuie-glace.
- La figure 5 est une seconde forme de réalisation de connectique reliant le bouton poussoir à un moteur d'entraînement d'essuie-glace.

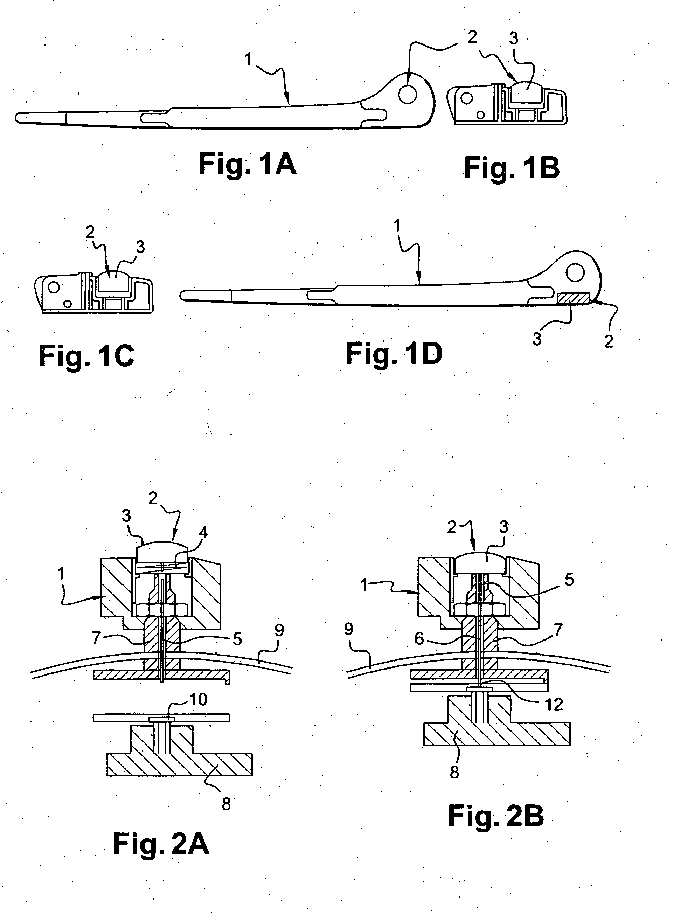

En référence, aux figures 1A et 1B, un porte-balai d'essuie-glace 1 comprend généralement d'un bras d'entraînement, d'une monture support, d'une vertèbre et d'une lame d'essuie-glace.

Une poignée est, dans certains cas, prévue sur la monture support (non représentée sur les figures).

Le dispositif selon l'invention est applicable à cette disposition de la poignée intégrée au porte-balai d'essuie-glace.

Un moyen de commande 2 d'ouverture et de fermeture de vitre arrière (non représentée) est intégré sur ou est disposé sur le pourtour du porte-balai d'essuie-glace 1. Plus précisément, ce moyen de commande 2 d'ouverture et de fermeture de vitre arrière inclut un bouton poussoir 3.

Plus préférentiellement, le bouton poussoir 3 est intégré au porte-balai 1.

De manière alternative, le bouton poussoir 3 est disposé par exemple sur la vitre arrière ou sur le pourtour du porte-balai d'essuie-glace 1 ou sur la partie longitudinale de la monture support du porte-balai 1 ou sur la poignée (non représentée), elle-même intégrée au porte-balai 1.

Les figures 2A et 2B sont des représentations en coupe d'une autre forme de réalisation de bouton poussoir selon l'invention, en positions respectivement ouverte et fermée.

Le moyen de commande 2 d'ouverture et de fermeture est actionné mécaniquement par le bouton poussoir 3 disposé sur le pourtour, ou intégré, au porte-balai d'essuie-glace 1, ou électroniquement au moyen d'un système de télécommande par liaison de type IR, radiofréquence ou autre.

Le bouton poussoir 3 porte contre un système d'actionneur ou ressort 4 qui agit sur un mécanisme d'actionnement ou tige d'action 5. Le ressort 4 peut être placé en amont ou en aval de la tige 5. La tige 5 coulisse dans un logement axial 6 prévu dans l'arbre moteur 7 du moteur d'entraînement 8 de l'essuie-glace. L'arbre moteur 7 traverse la vitre 9.

La tige 5 (au travers de la vitre 9) actionne, à son extrémité distale, un contacteur qui déclenche un bouton électrique 10, lui-même relié, par des moyens de connexion (non représentés), au moteur d'entraînement 8 pour permettre l'ouverture ou la fermeture de la vitre arrière 9.

De cette manière, l'ensemble du système électrique est situé à l'intérieur du véhicule. En effet, le moteur d'entraînement 8 est fixé, soit contre la vitre 9 directement à travers l'axe du moteur du balai d'essuie-glace 1, soit au niveau de la carrosserie. Lorsque le moteur d'entraînement 8 est fixé au niveau de la carrosserie, l'arbre moteur 7 traverse la vitre 9.

Le porte-balai 1 étant contre la vitre 9 lorsque celle-ci est ouverte, le système selon l'invention n'est pas retenu et est soumis à une force de rotation. Il est alors prévu un système de flasque interne (connu en soi et non représenté) pour réinitialiser la position initiale du moteur d'entraînement 8.

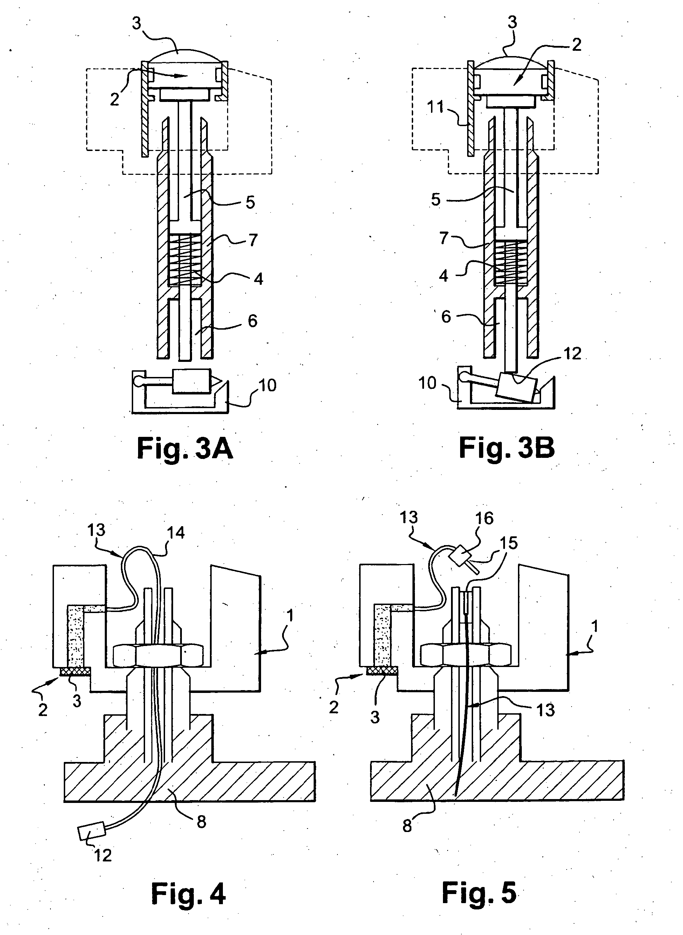

Les figures 3A et 3B illustrent une autre forme de réalisation d'un système d'actionneur, respectivement en position ouverte et fermée.

Le bouton poussoir 3 est constitué d'un corps 11 et d'une tige d'action 5 disposée entre le bouton poussoir 3 et le ressort 4. Le corps 11 du bouton poussoir 3 coulisse dans la tête du porte-balai 1.

La tige d'action 5, une fois actionnée, se déplace en translation dans un logement axial 6 prévu dans l'arbre moteur 7. La position limite de cette tige d'action 5 est celle qui forme un point de contact au niveau d'un contacteur 12 relié au moteur d'entrainement du dispositif selon l'invention (non représenté).

La figure 4 montre une première forme de réalisation de connectique reliant le bouton poussoir à un moteur d'entraînement du dispositif selon l'invention.

Les moyens de connexion 13 passent par l'intérieur du porte-balai 1 et leurs cheminements dépendent de la position du bouton poussoir 3 sur le porte-balai 1. Selon l'invention, les moyens de connexion 13 reliant le bouton poussoir 3 au moteur d'entraînement 8 passent par le logement axial 6 prévu dans l'arbre du moteur 7.

Les moyens de connexion 13 reliant le bouton poussoir 3 au moteur d'entraînement 8 peuvent être constitués de fils souple 14, de type connu en soi.

La figure 5 montre une seconde forme de réalisation de connectique reliant le bouton poussoir à un moteur d'entraînement du dispositif selon l'invention.

Des moyens de raccordement 15 peuvent être également ajoutés par l'intermédiaire d'un système du type « RJ 45 » référencé 16 ou tout système de connexion, de type connu.

Le système de commande d'ouverture du coffre peut également être couplé au dispositif selon l'invention.

Le dispositif, selon l'invention, peut être ajouté de manière supplémentaire même après l'installation du porte-balai d'essuie-glace 1. En effet, le porte-balai contenant ou non le dispositif selon l'invention possède le même aspect extérieur.

## Revendications

1. Dispositif d'ouverture et fermeture de vitre arrière (9) de véhicule, intégré à un dispositif de porte-balai d'essuie-glace (1) prévu sur la face arrière dudit véhicule et entraîné par un moteur d'entraînement (8) muni d'un arbre moteur (7), le dispositif de porte-balai d'essuie-glace intègre un moyen de commande (2) qui comporte un bouton poussoir (3), ce bouton poussoir (3) porte contre un ressort (4) et agit sur une tige d'action (5),
**caractérisé en ce que** la tige d'action (5) coulisse dans un logement axial (6) prévu dans l'arbre moteur (7) du moteur d'entrainement (8).

2. Dispositif selon la revendication 1, **caractérisé en ce que** le moyen de commande (2) est actionné mécaniquement par le bouton poussoir (3).

3. Dispositif selon l'une quelconque des revendications précédentes, **caractérisé en ce que** le ressort (4) peut être placé en amont ou en aval de la tige (5).

4. Dispositif selon l'une quelconque des revendications précédentes, **caractérisé en ce que** le bouton poussoir (3) est constitué d'un corps (11) et d'une tige d'action (5) disposée entre le bouton poussoir (3) et le ressort (4).

5. Dispositif selon l'une des revendications précédentes, **caractérisé en ce qu'**un contacteur (12), relié au moteur d'entrainement (8) par des moyens de connexions, est situé à une extrémité distale de la tige (5).

6. Dispositif d'ouverture et fermeture de vitre arrière (9) de véhicule, intégré à un dispositif de porte-balai d'essuie-glace (1) prévu sur la face arrière dudit véhicule et entraîné par un moteur d'entraînement (8) muni d'un arbre moteur (7), le dispositif de porte-balai d'essuie-glace intègre un moyen de commande (2) qui comporte un bouton poussoir (3), ce bouton poussoir (3) étant relié au moteur d'entraînement (8) par des moyens de connexions (13), constitués sous la forme de fils souples (14).
**caractérisé en ce que** les moyens de connexions (13) passent par un logement axial (6) prévu dans l'arbre moteur (7).

7. Dispositif selon la revendication 6, **caractérisé en ce que** le bouton poussoir (3) est intégré sur la partie longitudinale de la monture support du porte-balai d'essuie-glace (1).

8. Dispositif selon la revendication 6, **caractérisé en ce que** ledit bouton poussoir (3) est disposé sur une poignée intégrée audit porte-balai d'essuie-glace (1).

9. Dispositif selon la revendication 6, **caractérisé en ce que** ledit bouton poussoir (3) est disposé du coté de l'extrémité distale de l'axe du moteur (8).

10. Dispositif selon l'une des revendications 6 à 9, **caractérisé en ce qu'**il comporte des moyens de raccordement (15) du type prise « RJ 45 » (16) ou tout autre système de connexion.

11. Dispositif selon l'une des revendications 6 à 10, **caractérisé en ce que** le bouton poussoir (3) est susceptible d'être actionné par l'intermédiaire d'un système de télécommande du type IR, radiofréquence ou autre.

12. Dispositif selon l'une des revendications précédentes, **caractérisé en ce qu'**un système électrique est disposé à l'intérieur du véhicule par un système de fixation dudit moteur d'entraînement (8) sur la vitre arrière (9) ou dans la carrosserie.

13. Dispositif selon l'une des revendications précédentes, **caractérisé en ce qu'**il comprend un système de réinitialisation du système électrique lors de la fermeture de la vitre (9).

14. Dispositif selon l'une des revendications précédentes, **caractérisé en ce qu'**il est couplé à un système de commande d'ouverture du coffre.

## Patentansprüche

1. Vorrichtung zum Öffnen und Schließen der Heckscheibe (9) eines Fahrzeugs, die in eine Scheibenwischerblatt-Trägervorrichtung (1) integriert ist, die an der Rückseite des Fahrzeugs vorgesehen ist und durch einen Antriebsmotor (8) angetrieben wird, der mit einer Motorwelle (7) versehen ist, wobei in die Scheibenwischerblatt-Trägervorrichtung ein Betätigungsmittel (2) integriert ist, das einen Druckknopf (3) aufweist, wobei sich dieser Druckknopf (3) auf einer Feder (4) abstützt und auf einen Betätigungsstift (5) einwirkt,
**dadurch gekennzeichnet, dass** der Betätigungsstift (5) in einem axialen Aufnahmeraum (6) gleitet, der in der Motorwelle (7) des Antriebsmotors (8) vorgesehen ist.

2. Vorrichtung nach Anspruch 1, **dadurch gekennzeichnet, dass** das Betätigungsmittel (2) durch den Druckknopf (3) mechanisch betätigt wird.

3. Vorrichtung nach einem der vorhergehenden Ansprüche, **dadurch gekennzeichnet, dass** die Feder (4) stromaufseitig oder stromabseitig des Stifts (5) angeordnet sein kann.

4. Vorrichtung nach einem der vorhergehenden Ansprüche, **dadurch gekennzeichnet, dass** der Druckknopf (3) aus einem Körper (11) und aus einem Betätigungsstift (5), der zwischen dem Druckknopf (3) und der Feder (4) angeordnet ist, gebildet ist.

5. Vorrichtung nach einem der vorhergehenden Ansprüche, **dadurch gekennzeichnet, dass** sich ein Kontaktgeber (12), der mit dem Antriebsmotor (8) über Verbindungsmittel verbunden ist, an einem distalen Ende des Stifts (5) befindet.

6. Vorrichtung zum Öffnen und Schließen der Heckscheibe (9) eines Fahrzeugs, die in eine Scheibenwischerblatt-Trägervorrichtung (1) integriert ist, die an der Rückseite des Fahrzeugs vorgesehen ist und durch einen Antriebsmotor (8) angetrieben wird, der mit einer Motorwelle (7) versehen ist, wobei in die Scheibenwischerblatt-Trägervorrichtung ein Betätigungsmittel (2) integriert ist, das einen Druckknopf (3) aufweist, wobei dieser Druckknopf (3) mit dem Antriebsmotor (8) über Verbindungsmittel (13) verbunden ist, die in Form nachgiebiger Drähte (14) gebildet sind,
**dadurch gekennzeichnet, dass** die Verbindungsmittel (13) durch einen axialen Aufnahmeraum (6) verlaufen, der in der Motorwelle (7) vorgesehen ist.

7. Vorrichtung nach Anspruch 6, **dadurch gekennzeichnet, dass** der Druckknopf (3) in den longitudinalen Abschnitt der Trägergarnitur des Scheibenwischerblatt-Trägers (1) integriert ist.

8. Vorrichtung nach Anspruch 6, **dadurch gekennzeichnet, dass** der Druckknopf (3) an einem Griff angeordnet ist, der in den Scheibenwischerblatt-Träger (1) integriert ist.

9. Vorrichtung nach Anspruch 6, **dadurch gekennzeichnet, dass** der Druckknopf (3) auf Seiten des distalen Endes der Achse des Motors (8) angeordnet ist.

10. Vorrichtung nach einem der Ansprüche 6 bis 9, **dadurch gekennzeichnet, dass** sie Verbindungsmittel (15) des Steckertyps "RJ 45" (16) oder irgendeines anderen Verbindungssystems umfasst.

11. Vorrichtung nach einem der Ansprüche 6 bis 10, **dadurch gekennzeichnet, dass** der Druckknopf (3) über ein Fernsteuerungssystem des Typs IR, Hochfrequenz oder eines anderen Typs betätigt werden kann.

12. Vorrichtung nach einem der vorhergehenden Ansprüche, **dadurch gekennzeichnet, dass** ein elektrisches System in dem Fahrzeug über ein System zum Befestigen des Antriebsmotors (8) an der Heckscheibe (9) oder in der Karosserie angeordnet ist.

13. Vorrichtung nach einem der vorhergehenden Ansprüche, **dadurch gekennzeichnet, dass** sie ein System zum Reinitialisieren des elektrischen Systems beim Schließen der Scheibe (9) umfasst.

14. Vorrichtung nach einem der vorhergehenden Ansprüche, **dadurch gekennzeichnet, dass** sie mit einem System zum Steuern des Öffnens des Kofferraums gekoppelt ist.

## Claims

1. Device for opening and closing a rear window (9) of a vehicle, incorporated in a windscreen wiper blade holder device (1) provided on the rear face of the said vehicle and driven by a drive motor (8) provided with a drive shaft (7), the windscreen wiper blade holder device incorporating a control means (2) which comprises a push-button (3), this push-button (3) bearing against a spring (4) and acting on an actuating rod (5), **characterized in that** the actuating rod (5) slides in an axial housing (6) provided in the drive shaft (7) of the drive motor (8).

2. Device according to Claim 1, **characterized in that** the control means (2) is actuated mechanically by the push-button (3).

3. Device according to either one of the preceding claims, **characterized in that** the spring (4) can be placed upstream or downstream of the rod (5).

4. Device according to any one of the preceding claims, **characterized in that** the push-button (3) is formed by a body (11) and by an actuating rod (5) arranged between the bush-button (3) and the spring (4).

5. Device according to one of the preceding claims, **characterized in that** a contactor (12), connected to the drive motor (8) by connection means, is situated at a distal end of the rod (5).

6. Device for opening and closing a rear window (9) of a vehicle, incorporated in a windscreen wiper blade holder device (1) provided on the rear face of the said vehicle and driven by a drive motor (8) provided with a drive shaft (7), the windscreen wiper blade holder device incorporating a control means (2) which comprises a push-button (3), this push-button (3) being connected to the drive motor (8) by connection means (13) taking the form of flexible wires (14), **characterized in that** the connection means (13) pass through an axial housing (6) provided in the drive shaft (7).

7. Device according to Claim 6, **characterized in that** the push-button (3) is incorporated in the longitudinal part of the support mount of the windscreen wiper blade holder (1).

8. Device according to Claim 6, **characterized in that** the said push-button (3) is arranged on a handle incorporated in the said windscreen wiper blade holder (1).

9. Device according to Claim 6, **characterized in that** the said push-button (3) is arranged on the distal end side of the axis of the motor (8).

10. Device according to one of Claims 6 to 9, **characterized in that** it comprises coupling means (15) of the "RJ 45" plug type (16) or any other connection system.

11. Device according to one of Claims 6 to 10, **characterized in that** the push-button (3) is capable of being actuated via a remote control system of the IR or radio frequency type or any other type.

12. Device according to one of the preceding claims, **characterized in that** an electrical system is arranged inside the vehicle by means of a system for fastening the said drive motor (8) on the rear window (9) or in the vehicle body.

13. Device according to one of the preceding claims, **characterized in that** it comprises a system for reinitializing the electrical system during the closure of the window (9).

14. Device according to one of the preceding claims, **characterized in that** it is coupled to a system for controlling the opening of the boot.
